# EUROPÄISCHE PATENTSCHRIFT

(11) **EP 2 700 569 B1**
(45) Veröffentlichungstag und Bekanntmachung des Hinweises auf die Patenterteilung: **04.05.2016**
(21) Anmeldenummer: 13003864.9
(22) Anmeldetag: 02.08.2013
(51) Int. Cl.: B62D 49/04, E01H 5/06, B60J 11/06

(54) **Anordnung einer Anbauplatten-Abdeckung an einer Frontanbauplatte eines Fahrzeugs, insbesondere eines Nutzfahrzeugs**
Arrangement of a mounting plate cover for a mounting plate on a vehicle, in particular a utility vehicle
Agencement d'une couverture de plaque de fixation d'une plaque de fixation sur un véhicule, notamment un véhicule utilitaire.

(30) Priorität: 25.08.2012 DE 102012016861
(43) Veröffentlichungstag der Anmeldung: 26.02.2014
(73) Patentinhaber: MAN Truck & Bus AG, 80995 München (DE)
(72) Erfinder: Foscari, Nicola, 80939 München (DE)

(56) Entgegenhaltungen:
- DE-A1- 3 911 734
- DE-A1-102009 044 414
- DE-A1-102010 032 357
- US-A- 5 560 631

## Beschreibung

Die Erfindung betrifft eine Unordnung einer Anbauplatten-Abdeckung an einer Frontanbauplatte eines Fahrzeugs, insbesondere eines Nutzfahrzeugs, nach dem Oberbegriff des Anspruchs 1.

Um eine schnelle Montage von Anbaugeräten, wie beispielsweise eines Schneepflugs an Nutzfahrzeugen, zu ermöglichen, ist es allgemein bekannt, Nutzfahrzeuge mit einer Frontanbauplatte als fahrzeugfeste Stahlplatte einer Schnellwechselvorrichtung auszurüsten. Solche Frontanbauplatten werden regelmäßig in genormten Ausführungen verbaut, um Anbausysteme unterschiedlicher Gerätehersteller kompatibel zu machen, wobei Frontanbauplatten insbesondere nach der deutschen Industrienorm (DIN76060/DIN EN 15432) oder der österreichischen Norm (ÖNORM S2044/ÖNORM EN 15432) verwendet werden.

Ein Trägersystem für eine Frontanbauplatte zur Montage an einem Nutzfahrzeug ist beispielsweise aus DE 10 2008 039 949 A1 bekannt. Anbausysteme zur Ankoppelung eines Schneepflugs an eine Frontanbauplatte sind beispielsweise aus DE 39 11 734 C3 und DE 22 64 428 B2 bekannt.

Eine freistehende Frontanbauplatte ohne montiertes Anbaugerät ist ein an der "Außenfläche" des Nutzfahrzeugs nach außen gerichtetes Teil, von dem Fußgänger, Radfahrer oder Motorradfahrer erfasst werden können, welches durch seine Form, Abmessung und Gestaltfestigkeit ein Verletzungsrisiko für Personen vergrößern kann, die bei einen Zusammenstoß aufprallen oder gestreift und dadurch verletzt werden können. Da solche Teile, insbesondere mit stabilen, scharfen Kanten an "Außenflächen" von Führerhäusern von Nutzfahrzeugen nach der Richtlinie 92/114/EWG DES RATES vom 17. Dezember 1992 nicht zulässig sind, werden in allgemein bekannter Weise solche Frontanbauplatten ohne Anbaugeräte mit einer Anbauplatten-Abdeckung als frontseitige Schutzabdeckung abgedeckt.

Da eine Frontanbauplatte eine möglichst schnelle Montage eines Anbaugeräts oder den Wechsel von Anbaugeräten ermöglichen soll, ist es geboten, auch die Anbauplatten-Abdeckung in ihrer Funktion als Schutzabdeckung möglichst schnell und unverlierbar befestigen und wieder entfernen zu können.

Bisher wird dies mit Schnappverschlüssen oder Drehverschlüssen oder Bajonettverschlüssen durchgeführt, wobei jeweils ein Verschlussteil an der Frontanbauplatte und das zugeordnete andere Verschlussteil an der Plattenabdeckung angebracht ist. Diese bekannte Befestigungsart hat eine Reihe von Nachteilen:

Solche Verschlüsse und ihre Verschlussteile sind aus einer Mehrzahl relativ kleiner Verschlusselemente aufgebaut, welche für eine sichere Verbindung genau ineinandergreifen müssen. Dadurch ist der Aufbau solcher Verschlüsse kompliziert und die Handhabung aufwändig. Zudem können Elemente der Verschlüsse beschädigt werden oder verloren gehen. Weiter ist zu berücksichtigen, dass der Bereich einer Frontanbauplatte besonders stark Verschmutzungseinflüssen ausgesetzt ist, die eine leichtgängige Handhabung und einen sicheren Eingriff von Verschlüssen negativ beeinflussen können bzw. eine aufwändige Reinigung erfordern. Zudem kann mit derartigen Befestigungssystemen eine gewünschte spaltfreie Anlageverbindung toleranzbedingt oftmals nur mit einem erheblichen Aufwand hergestellt werden.

Aufgabe der Erfindung ist es daher, eine Anordnung einer Anbauplatten-Abdeckung als Schutzabdeckung an einer Frontanbauplatte eines Fahrzeugs, insbesondere eines Nutzfahrzeugs, vorzuschlagen, bei der die Anbauplatten-Abdeckung bei Bedarf besonders einfach, schnell und sicher in einer gewünschten Anlageverbindung angebracht und bei Bedarf auch wieder einfach, schnell und sicher abgenommen werden kann.

Diese Aufgabe wird gelöst mit den Merkmalen des Anspruchs 1. Vorteilhafte Ausgestaltungen sind Gegenstand der darauf rückbezogenen Unteransprüche.

Gemäß Anspruch 1 wird eine Anordnung einer Anbauplatten-Abdeckung an einer Frontbauplatte eines Fahrzeugs, insbesondere eines Nutzfahrzeugs, mit einer Frontanbauplatte für die bedarfsweise Montage von Anbaugeräten, und mit einer daran lösbar befestigbaren Anbauplatten-Abdeckung als frontseitige Schutzabdeckung vorgeschlagen, bei der erfindungsgemäß vorgesehen ist, dass die Anbauplatten-Abdeckung mittels wenigstens einer Magnetverbindung lösbar an der Frontanbauplatte gehalten ist.

Mittels einer derartigen Magnetverbindung gelingt eine besonders einfache, schnelle und funktionssichere lösbare Anbringung einer Anbauplatten-Abdeckung an der Frontanbauplatte, die bei Bedarf ebenso einfach, schnell und sicher wieder abgenommen werden kann. Der besondere Vorteil einer derartigen Magnetverbindung liegt insbesondere auch darin, dass mit dieser die Anbauplatten-Abdeckung auf einfache Weise in einer Anlageverbindung, bevorzugt in einer spaltfreien Anlageverbindung, an der Frontanbauplatte gehaltert und angebaut werden kann und somit eine gewünschte bzw. geforderte spaltfreie Anlageverbindung der Anbauplatten-Abdecküng an der Frontanbauplatte auf einfache Weise zuverlässig hergestellt werden kann.

Die wenigstens eine Magnetverbindung kann grundsätzlich auf unterschiedliche Weise hergestellt sein. So kann zum Beispiel die Anbauplatten-Abdeckung einen magnetisch anziehbaren Bereich aufweisen bzw. mit einem solchen magnetisch anziehbaren Bereich versehen sein. In einem solchen Fall wäre dann auf der der Anbauplatten-Abdeckung zugewandten Seite der Frontanbauplatte ein entsprechend magnetisierbarer bzw. dauerhaft magnetischer Bereich auszubilden bzw. anzubringen. Besonders bevorzugt ist jedoch, insbesondere in Verbindung mit einer durch eine ferromagnetische Stahlplatte gebildeten Frontanbauplatte, eine konkrete Ausführungsform, bei der die Frontanbauplatte wenigstens einen magnetisch anziehbaren Bereich aufweist bzw. mit wenigstens einem magnetisch anziehbaren Bereich versehen ist. In diesem Fall ist dann entsprechend auf der der Frontanbauplatte zugewandten Innenfläche der Anbauplatten-Abdeckung wenigstens ein magnetisierbarer oder dauerhaft magnetischer Bereich ausgebildet und/oder angebracht, der mit dem magnetisch anziehbaren Bereich der Frontanbauplatte dergestalt zusammenwirkt, dass die Anbauplatten-Abdeckung mittels der Magnetkraft der wenigstens einen Magnetverbindung lösbar an der Frontanbauplatte gehalten ist. Wie bereits zuvor erwähnt, macht eine derartige Ausgestaltung insbesondere dann Sinn, wenn die Frontanbauplatte ohnehin bereits wenigstens bereichsweise aus einem ferromagnetischen Material hergestellt ist, insbesondere durch eine Stahlplatte als Bestandteil einer fahrzeugfesten Schnellwechselvorrichtung für die bedarfsweise Montage von Anbaugeräten gebildet ist.

Gemäß einer hierzu besonders bevorzugten konkreten Ausführungsform wird vorgeschlagen, dass auf der der Frontanbauplatte zugewandten Innenfläche der aus einem nicht magnetischen oder nicht magnetisierbaren Material, vorzugsweise aus einem Kunststoffmaterial, hergestellten Anbauplatten-Abdeckung wenigstens ein Magnetstreifen fest angebracht ist. Dieser wenigstens eine, zum Beispiel durch eine Magnettolie ausgebildete Magnetstreifen wird bevorzugt so angebracht, dass bei einer Anlage der Anbauplatten-Abdeckung an der Frontanbauplatte mittels des wenigstens einen Magnetstreifens die lösbare Magnet- und/oder Anlageverbindung zwischen der Frontanbauplatte und der Anbauplatten-Abdeckung in der gewünschten Weise hergestellt wird. Insbesondere mit derartigen Magnetstreifen, die durch eine einfache Magnetfolie gebildet werden können, lässt sich ein großflächiger Magnetbereich realisieren, der eine besonders zuverlässige spaltfreie Anlageverbindung zwischen der vorzugsweise durch eine Stahlplatte gebildeten Frontanbauplatte und der bevorzugt aus einem Kunststoffmaterial hergestellten Anbauplatten-Abdeckung gewährleistet. Die besonders bevorzugte Ausführungsform der vorliegenden Erfindungsidee nutzt somit den Umstand, dass eine Stahl-Frontanbauplatte aus einem ferromagnetischen Material besteht, so dass darauf die mit wenigstens einem Magnetstreifen ausgerüstete Anbauplatten-Abdeckung bei einer Anlage stabil und lösbar sowie im Wesentlichen spaltfrei haftet.

Magnetfolienstreifen, die dazu an der Innenfläche der Anbauplatten-Abdeckung angebracht, vorzugsweise angeklebt werden, sind in unterschiedlichen Ausführungen mit unterschiedlichen Dicken und Haftkräften auf dem Markt erhältlich. Insbesondere sind sogenannte Power-Magnetfolien auf dem Markt erhältlich, die eine extrem hohe Haftstärke aufweisen, die durch die Verwendung von Neodymium-Eisen-Bor-Material erreicht wird.

Wie die zuvor gemachten Ausführungen zur vorliegenden Erfindungsidee zeigen, sind mit der erfindungsgemäß vorgeschlagenen Magnetverbindung zwischen der Anbauplatten-Abdeckung und der Frontanbauplatte keine problematischen Verschlusselemente mehr erforderlich, die verloren gehen, beschädigt werden oder klemmen können. Der Aufbau der Anbauplatten-Abdeckung wird wesentlich einfacher und in Verbindung mit der einfachen Handhabung auch kostengünstiger. Es ist lediglich sicherzustellen, dass die gegenseitigen Anlageflächen relativ sauber sind, wobei hier eine eventuell erforderliche Reinigung wesentlich einfacher als die Säuberung von Verschlusselementen ist.

Grundsätzlich sind der oder die verwendeten Magnetstreifen hinsichtlich ihrer Haftkraft, der Größe und Lage entsprechend den konkreten Gegebenheiten und Anforderungen an der Anbauplatten-Abdeckung dimensionierbar. Vorzugsweise werden jedoch mehrere, insbesondere drei Magnetstreifen in H-Form an der Innenseite des Abdeckplattenteils angeordnet, wobei die beiden seitlichen H-Schenkel vertikal an gegenüberliegenden Seitenbereichen der Anbauplatten-Abdeckung mit einem diese spaltfrei oder unter Belassung eines Spaltes verbindenden Querschenkel angebracht, vorzugsweise angeklebt, sind. Mit einer derartigen H-förmigen Ausgestaltung können zudem auf einfache Weise eventuell erforderliche Durchbrüche im Abdeckplattenteil auf einfache Weise über und/oder unter dem H-Querschenkel angebracht werden.

Die Anbauplatten-Abdeckung kann grundsätzlich einteilig ausgebildet sein. Besonders bevorzugt ist jedoch eine konkrete Ausgestaltung, bei der die Anbauplatten-Abdeckung mehrteilig ausgebildet ist und eine Außenschale, zum Beispiel aus einem Kunststoffmaterial, aufweist, auf deren der Frontanbauplatte zugewandten Seite eine Innenschale, vorzugsweise ebenfalls aus einem Kunststoffmaterial, befestigt ist. Die Verbindung kann hier zum Beispiel mittels einer Schweißverbindung erfolgen, zum Beispiel in Verbindung mit Kunststoffbauteilen mittels einer Ultraschallschweißung. Alternativ oder zusätzlich kann selbstverständlich auch eine Verklebung oder jede geeignete Verbindungsmöglichkeit vorgesehen sein.

In Verbindung mit einer derartigen mehrteiligen Ausgestaltung der Anbauplatten-Abdeckung aus einer Außenschale und einer Innenschale ist es besonders bevorzugt, dass der wenigstens eine Magnetstreifen auf der der Frontanbauplatte zugewandten Seite der Innenschale befestigt, insbesondere angeklebt ist. Das heißt, dass dann die Innenschale in einem solchen Fall hinsichtlich ihrer geometrischen Ausgestaltung und ihrer Materialwahl optimal auf die dort anzubringenden Magnetstreifen abgestimmt, konstruiert und ausgebildet werden kann. Für eine zuverlässige Schutzfunktion der Schutzabdeckung ist vorgesehen, dass sich die Frontanbauplatte im montierten Zustand der Anbauplatten-Abdeckung über die gesamte Plattenfläche erstreckt. Alternativ oder zusätzlich dazu kann in Verbindung mit diesem Aspekt der Schutzabdeckung weiter vorgesehen sein, dass die Frontanbauplatte im montierten Zustand der Anbauplatten-Abdeckung wenigstens bereichsweise kantenübergreifend von der Anbauplatten-Abdeckung abgedeckt ist. Des Weiteren wird die Schutzfunktion der Anbauplatten-Abdeckung noch dadurch vergrößert, dass diese gerundete Ecken und Kanten aufweist.

In einer konkreten Ausgestaltung ist die Anbauplatten-Abdeckung deckeiförmig mit einem der Gestalt der Frontanbauplatte entsprechenden Abdeckungsplattenteil ausgebildet, an dem randseitig wenigstens bereichsweise umlaufend, vorzugsweise vollständig umlaufend, ein Randsteg abragt, der in der Anlageposition des Abdeckungsplattenteils an der Frontanbauplatte deren Plattenrand wenigstens bereichsweise übergreift, so dass gegebenenfalls scharfe Kantenränder und abstehende Teile mit einem Gefährdungspotential zuverlässig abgedeckt sind.

Dabei soll die Gestalt und die Ausdehnung der Anbauplatten-Abdeckung bzw. des Deckplattenteils so groß gewählt werden, dass große genormte Frontanbauplatten abdeckbar sind, so dass damit auch kleinere genormte Frontanbauplatten mit derselben Anbauplatten-Abdeckung kompatibel sind. Insbesondere kann eine Anbauplatten-Abdeckung so gestaltet sein, dass sie für eine Abdeckung einer genormten Frontanbauplatte nach DIN76060/DIN EN 15432 geeignet ist, an der seitlich Anschlusselemente abstehen, die ebenfalls überdeckt werden. Eine so gestaltete Anbauplatten-Abdeckung ist auch für eine Anbauplatte nach ÖNORM S2044/ÖNORM EN 15432 geeignet, welche durch das Fehlen von seitlichen Anschlusselementen eine geringere Breite aufweist.

Bei einer besonders bevorzugten Ausführungsform sind im oberen Randbereich der Anbauplatten-Abdeckung wenigstens zwei beabstandete, bezogen auf die Hochachse nach unten abragende Einhängeelemente angeformt, mit denen die Anbauplatten-Abdeckung von oben her am oberen Rand der Frontanbauplatte einhängbar ist. Solche bevorzugt durch Einhängehaken gebildete Einhängeelemente stellen einerseits eine Justierhilfe bei der Anbringung der Anbauplatten-Abdeckung dar und sind andererseits Sicherungselemente, die auch unter Belastung ein Abfallen der Anbauplatten-Abdeckung von der Frontanbauplatte zuverlässig verhindern.

Ferner beansprucht die Erfindung ein Fahrzeug, insbesondere ein Nutzfahrzeug, mit einer Anordnung einer Anbauplatten-Abdeckung an einer Frontanbauplatte wie sie vorstehend allgemein sowie mit konkreten Ausführungsbeispielen beschrieben worden ist.

Anhand einer Zeichnung wird die Erfindung weiter erläutert.

Es zeigen:
- Fig. 1: eine schematische perspektivische Darstellung eines Nutzfahrzeugs mit einer Frontanbauplatte sowie eine zur Anbringung bereitstehende (vergrößerte) Anbauplatten-Abdeckung,
- Fig. 2: eine perspektivische Ansicht der Innenseite einer Anbauplatten-Abdeckung,
- Fig. 3: eine Draufsicht auf die Innenseite der Anbauplatten-Abdeckung nach Fig. 2, und
- Fig. 4: schematisch eine Schnittansicht entlang der Linie A-A der Fig. 3.

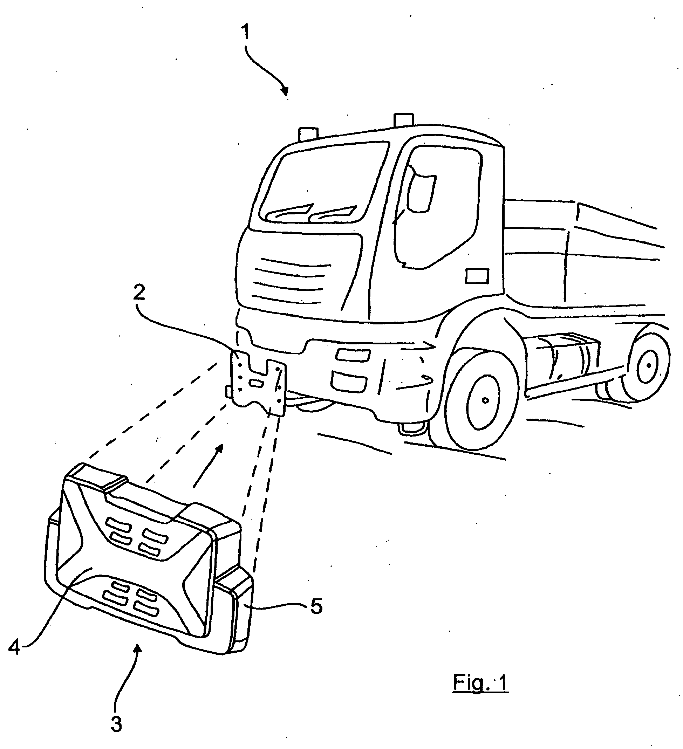

In Fig. 1 ist schematisch ein Nutzfahrzeug 1 als Lkw mit einer fahrzeugfesten Frontanbauplatte 2 als vertikal und quer zum Fahrzeug ausgerichteten stehende Stahlplatte dargestellt. An dieser genormten Frontanbauplatte können in einem Schnellwechselverfahren unterschiedliche Anbaugeräte, insbesondere ein Schneepflug, montiert werden.

Wenn keine Anbaugeräte montiert sind, wird auf die Frontanbauplatte 2 eine Anbauplatten-Abdeckung 3 als Schutzabdeckung aufgesetzt. Dabei liegt ein Abdeckungsplattenteil 4 der Anbauplatten-Abdeckung 3 plan und flächig an der Frontanbauplatte 2 an und deckt diese ab. Zudem weist die Anbauplatten-Abdeckung 3 einen umlaufenden Randsteg 5 auf, der den Plattenrand der Frontanbauplatte übergreift und diesen abdeckt.

Die Anbauplatten-Abdeckung 3 ist mit gerundeten Kanten und Ecken hergestellt.

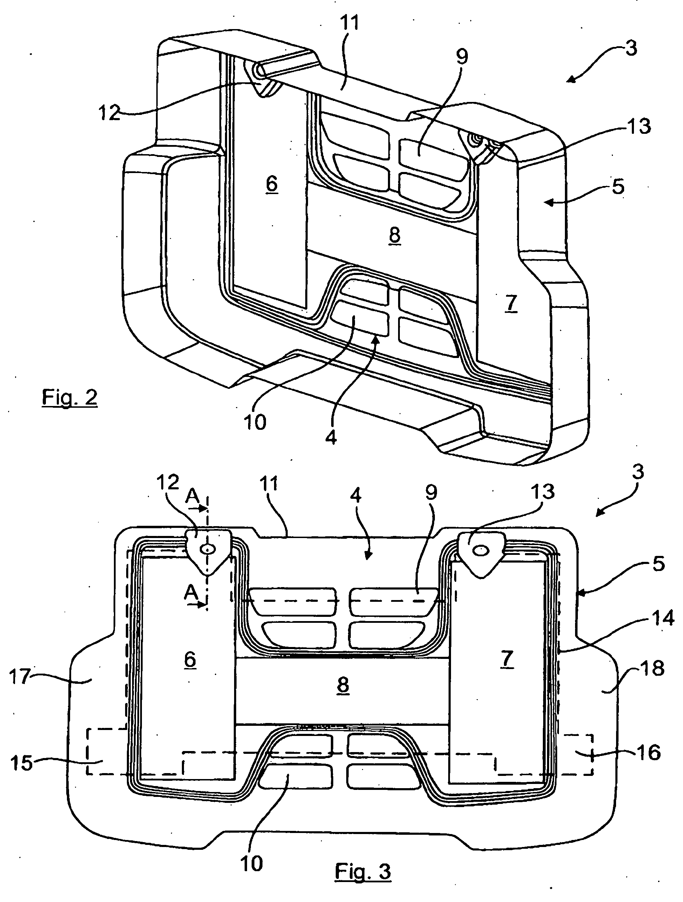

Die Befestigung der Anbauplatten-Abdeckung 3 an der Frontanbauplatte 2 wird anhand der Fig. 2 und 3 näher erläutert, wobei Fig. 2 eine perspektivische Ansicht der Rückseite der Anbauplattenabdeckung 3 und Figur eine entsprechende Draufsicht darstellt:

Aus den Fig. 2 und 3 ist die Innenseite des planen Abdeckungsplattenteils 4 zu ersehen, von dem umlaufend der Randsteg 5 abragt. Am Abdeckungsplattenteil 4 sind an dessen Innenseite drei Magnetstreifen 6, 7, 8 aus einer Magnetfolie aufgeklebt. Die Magnetstreifen. 6, 7, 8 bilden eine H-Form, wobei die beiden Magnetstreifen 6, 7 seitliche, vertikal ausgerichtete H-Schenkel bilden, welche an gegenüberliegenden Seitenbereichen des Abdeckplattenteils 4 angeordnet sind. Die Magnetstreifen 6, 7 werden durch den Magnetstreifen 8 als H-Querschenkel verbunden. Im Bereich ober und unter dem Magnetstreifen 8 sind Durchbrüche 9, 10 im Abdeckplattenteil 4 angebracht.

Im Bereich des oberen Randstegs 11 sind zwei nach unten abragende, seitlich beabstandete Einhängehaken 12, 13 angeformt, mit denen die Anbauplatten-Abdeckung 3 von oben her am oberen Rand der Frontanbauplatte 2 eingehängt wird. Wie aus Fig. 2 ersichtlich, ist der Abstand zwischen der Innenseite des Abdeckungsplattenteils 4 und den Einhängehaken 12, 13 der Stärke der Frontanbauplatte 2 angepasst, so dass eine formschlüssige Einhängeverbindung entsteht. Der Randsteg 5 ist im Vergleich zu diesem Abstand ersichtlich breiter gewählt, so dass vom Randsteg 5 der Rand der Frontanbauplatte 2 weit übergriffen und sicher abgedeckt wird.

In Fig. 3 ist schematisch und strichliert die abzudeckende Außenkontur 14 einer Frontanbauplatten-Anordnung nach DIN76060/DIN EN 15432 eingezeichnet, wobei hier im unteren Plattenteilbereich jeweils beidseitig noch Anschlusselemente 15, 16 abragen, die mit abzudecken sind. Dazu ist die Anbauplatten-Abdeckung 3 in diesen Bereichen mit Auswölbungen 17, 18 versehen, welche die Anschlusselemente 15, 16 aufnehmen und abdecken. Da der Plattenteil der Frontanbauplatte 2 nach der ÖNORM S2044/ÖNORM EN 15432 etwa gleich groß ist, jedoch keine seitlichen Anschlusselemente 15, 16 aufweist, kann die dargestellte Ausführung der Anbauplatten-Abdeckung 3 auch dafür verwendet werden, wobei die Auswölbungen 17, 18 freibleiben.

Zur Anbringung der Anbauplatten-Abdeckung 3 an der Frontanbauplatte 2 wird die Anbauplatten-Abdeckung 3 einfach von oben her auf die Frontanbauplatte 2 mit den Einhängehaken 12, 13 aufgesteckt. Anschließend wird die Anbauplatten-Abdeckung 3 mit dem Abdeckungsplattenteil 4 bzw. den Magnetstreifen 6, 7, 8 an die Frontanbauplatte 2 angedrückt, wodurch eine stabile magnetische Haftungsverbindung in Verbindung mit einer gewünschten bzw. geforderten spaltfreien Anlageverbindung hergestellt ist. Ebenso einfach kann die Anbauplatten-Abdeckung 3 von der Frontanbauplatte 2 wieder abgenommen werden, indem die Anbauplatten-Abdeckung 3 von der Frontanbauplatte 2 von Hand abgehoben und ausgehängt wird.

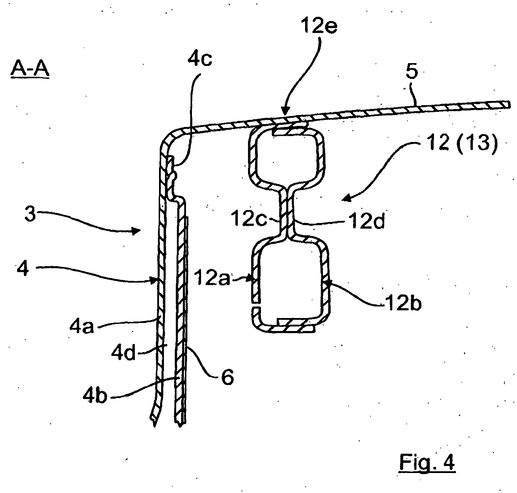

Wie dies insbesondere aus der einen Schnitt entlang der Linie A-A der Fig. 3 zeigenden Fig. 4 ersichtlich ist, ist die Anbauplatten-Abdeckung 3 hier mehrteilig ausgebildet und weist eine durch das Abdeckungs-Plattenteil 4 gebildete Außenschale 4a auf, auf deren der Frontanbauplatte 2 zugewandten Seite eine Innenschale 4b befestigt ist. Wie dies der Fig. 4 weiter entnommen werden kann, weist die Innenschale 4b hierzu einen vorzugsweise randseitig umlaufenden Befestigungsflansch 4c auf, mittels dem die Innenschale 4b, zum Beispiel stoffschlüssig, insbesondere durch Ultraschallschweißen und/oder durch Kleben, mit der Außenschale 4a fest verbunden ist. Der Randflansch 4c ist hier beispielhaft so abgewinkelt, dass die Innenschale 4b im mittleren, zentralen Bereich einen definierten Spaltabstand 4d von der Außenschale 4a aufweist, der zum Beispiel wenige Millimeter betragen kann. Dieser zentrale, mittlere Bereich der Innenschale 4b bildet somit die plane, ebene Innenseite des Abdeckungsplattenteils 4 aus, auf die die hier beispielhaft drei Magnetstreifen 6, 7, 8 aus einer Magnetfolie funktionssicher und zuverlässig aufgeklebt werden können. In der Darstellung der Fig. 4 handelt es sich hierbei um den Magnetstreifen 6.

Die Außenschale 4a kann zum Beispiel durch ein Coextrudat verschiedener Kunststoffmaterialien hergestellt sein, so zum Beispiel aus Acrylnitril-Butadien-Styrol (ABS) und Acrylester-Styrol-Acrylnitril (ASA, insbesondere ASA-1). Die Innenschale kann aus einem gleichen oder auch aus einem unterschiedlichen Kunststoffmaterial hergestellt sein, zum Beispiel vollständig aus einem ABS-Kunststoffmaterial hergestellt sein.

Wie dies der Fig. 4 weiter entnommen werden kann, können auch die Einhängehaken 12, 13 mehrschalig aus einem z.B. Kunststoffmaterial ausgebildet sein. Wie dies in der Fig. 4 beispielhaft für den Einhängehaken 12 (der Einhängehaken 13 ist baugleich) dargestellt ist, können hier zwei im Wesentlichen W-förmige Winkel 12a, 12b mit ihrer jeweiligen im Wesentlichen gleich ausgebildeten mittleren abgeflachten Ausbauchung 12c und 12d in einer flächigen Anlageverbindung aneinander liegen und dort zum Beispiel stoffschlüssig verbunden sein. Ebenso können diese Winkel 12a, 12b in ihren jeweiligen Randbereichen in einer flächigen Anlageverbindung aneinander anliegen und dort miteinander verbunden sein. Ebenso können diese Winkel dann mit dem umlaufenden Randsteg 5 im Bereich des Bezugszeichens 12e in einer flächigen Anlageverbindung stoffschlüssig verbunden sein, um eine stabile Anbindung der Einhängehaken 12 bzw. 13 sicherzustellen.

### Bezugszeichenliste

- 1: Nutzfahrzeug
- 2: Frontanbauplatte
- 3: Anbauplatten-Abdeckung
- 4: Abdeckungsplattenteil
- 4a: Außenschale
- 4b: Innenschale
- 4c: Randflansch
- 4d: Spalt
- 5: Randsteg
- 6: Magnetstreifen
- 7: Magnetstreifen
- 8: Magnetstreifen
- 9: Durchbrüche
- 10: Durchbrüche
- 11: oberer Randsteg
- 12: Einhängehaken
- 12a: Winkel
- 12b: Winkel
- 12c: Ausbauchung
- 12d: Ausbauchung
- 12e: Verbindungsstelle
- 13: Einhängehaken
- 14: Außenkontur
- 15: Anschlusselemente
- 16: Anschlusselemente
- 17: Auswölbung .
- 18: Auswölbung

## Patentansprüche

1. Anordnung einer Anbauplatten-Abdeckung an einer Frontanbauplatte eines Fahrzeugs, insbesondere eines Nutzfahrzeugs, mit einer Frontanbauplatte (2) für die bedarfsweise Montage von Anbaugeräten, und mit einer daran lösbar befestigbaren Anbauplatten-Abdeckung (3) als frontseitige Schutzabdeckung, **dadurch gekennzeichnet, dass** die Anbauplatten-Abdeckung (3) mittels wenigstens einer Magnetverbindung lösbar an der Frontanbauplatte (2) gehalten ist.

2. Anordnung nach Anspruch 1, **dadurch gekennzeichnet, dass** die Anbauplatten-Abdeckung (3) mittels der wenigstens einen Magnetverbindung wenigstens bereichsweise in einer Anlageverbindung, insbesondere in einer spaltfreien Anlageverbindung, an der Frontanbauplatte (2) gehalten ist.

3. Anordnung nach Anspruch 1 oder 2, **dadurch gekennzeichnet,**
**dass** die Frontanbauplatte (2) wenigstens einen magnetisch anziehbaren Bereich aufweist und/oder mit wenigstens einem magnetisch anziehbaren Bereich versehen ist, und
**dass** auf der der Frontanbauplatte (2) zugewandten Innenfläche der Anbauplatten-Abdeckung (3) wenigstens ein magnetisierbarer oder dauerhaft magnetischer Bereich (6, 7, 8) ausgebildet und/oder angebracht ist, der mit dem magnetisch anziehbaren Bereich der Frontanbauplatte (2) dergestalt zusammenwirkt, dass die Anbauplatten-Abdeckung (3) mittels der Magnetkraft der wenigstens einen Magnetverbindung lösbar an der Frontanbauplatte (2) gehalten ist.

4. Anordnung nach einem der vorhergehenden Ansprüche, **dadurch gekennzeichnet, dass** die Frontanbauplatte (2) wenigstens bereichsweise aus einem ferromagnetischen Material hergestellt ist, insbesondere durch eine Stahlplatte gebildet ist.

5. Anordnung nach Anspruch 3 oder 4, **dadurch gekennzeichnet, dass** auf der der Frontanbauplatte (2) zugewandten Innenfläche der aus einem nicht magnetischen oder nicht magnetisierbaren Material, vorzugsweise aus einem Kunststoffmaterial, hergestellten Anbauplatten-Abdeckung (3) wenigstens ein Magnetstreifen (6, 7, 8), vorzugsweise in Form einer Magnetfolie, fest angebracht ist, dergestalt, dass bei einer Anlage der Anbauplatten-Abdeckung (3) an der Frontanbauplatte (2) mittels des wenigstens einen Magnetstreifens (6, 7, 8) die lösbare Magnet- und/oder Anlageverbindung zwischen der Frontanbauplatte (2) und der Anbauplatten-Abdeckung (3) hergestellt ist.

6. Anordnung nach einem der vorhergehenden Ansprüche, **dadurch gekennzeichnet, dass** die Anbauplatten-Abdeckung (3) mehrteilig ausgebildet ist und eine Außenschale (4a), vorzugsweise aus einem Kunststoffmaterial, aufweist, auf deren der Frontanbauplatte (2) zugewandten Seite eine Innenschale (4b), vorzugsweise aus einem Kunststoffmaterial, befestigt ist, insbesondere mittels wenigstens einer Schweißverbindung, befestigt ist.

7. Anordnung nach Anspruch 5 und Anspruch 6, **dadurch gekennzeichnet, dass** der wenigstens eine Magnetstreifen (6, 7, 8) auf der der Frontanbauplatte (2) zugewandten Seite der Innenschale (4b) befestigt, insbesondere angeklebt, ist.

8. Anordnung nach einem der Ansprüche 4 bis 6, **dadurch gekennzeichnet, dass** mehrere, vorzugsweise drei, Magnetstreifen (8, 7, 8) in einer H-Form an der Innenseite der Anbauplatten-Abdeckung (3) angeordnet sind, wobei die beiden seitlichen H-Schenkel (6, 7) vertikal an gegenüberliegenden Seitenbereichen der Anbauplatten-Abdeckung (3) mit einem verbindenden H-Querschenkel (8) angebracht, vorzugsweise angeklebt, sind, wobei bevorzugt vorgesehen ist, dass im Bereich über und/oder unter dem Querschenkel (8) Durchbrüche (9, 10) in der Anbauplatten-Abdeckung (3) ausgebildet sind.

9. Anordnung nach einem der vorhergehenden Ansprüche, **dadurch gekennzeichnet, dass** sich die Frontanbauplatte (2) im montierten Zustand der Anbauplatten-Abdeckung (3) über die gesamte Plattenfläche erstreckt und/oder die Frontanbauplatte (2) im montierten Zustand der Anbauplatten-Abdeckung (3) wenigstens bereichsweise kantenübergreifend von der Anbauplatten-Abdeckung (3) abgedeckt ist.

10. Anordnung nach einem der vorhergehenden Ansprüche, **dadurch gekennzeichnet, dass** die Anbauplatten-Abdeckung (3) gerundete Ecken und Kanten aufweist.

11. Anordnung nach einem der vorhergehenden Ansprüche, **dadurch gekennzeichnet, dass** die Anbauplatten-Abdeckung (3) deckelförmig mit einem der Gestalt der Frontanbauplatte (2) entsprechenden Abdeckungsplattenteil (4) ausgebildet ist, an dem randseitig wenigstens bereichsweise umlaufend, vorzugsweise vollständig umlaufend, ein Randsteg (5) abragt, der in der Anlageposition des Abdeckungsplattenteils (4) an der Frontanbauplatte (2) deren Plattenrand übergreift und abdeckt.

12. Anordnung nach einem der vorhergehenden Ansprüche, **dadurch gekennzeichnet, dass** in einem oberen Randstegbereich (11) der Anbauplatten-Abdeckung (3) wenigstens zwei beabstandete, in Hochachsenrichtung nach unten abragende Einhängelemente, insbesondere Einhängehaken (12, 13), angebracht, insbesondere angeformt, sind, mit denen die Anbauplatten-Abdeckung (3) von oben her an einem oberen Rand der Frontanbauplatte (2) einhängbar ist.

13. Fahrzeug, insbesondere Nutzfahrzeug, mit einer Anordnung einer Anbauplatten-Abdeckung an einer Frontanbauplatte nach einem der vorhergehenden Ansprüche.

## Claims

1. An arrangement of a mounting plate cover on a front mounting plate of a vehicle, in particular a commercial vehicle, having a front mounting plate (2) for mounting accessory equipment as required, and having a mounting plate cover (3) which can be fastened releasably thereto as front-side protective covering, **characterized in that** the mounting plate cover (3) is held releasably on the front mounting plate (2) by means of at least one magnetic connection.

2. The arrangement according to Claim 1, **characterized in that** the mounting plate cover (3) is held by means of the at least one magnetic connection at least in regions in a bearing connection, in particular in a gap-free bearing connection, on the front mounting plate (2).

3. The arrangement according to Claim 1 or 2, **characterized in that** the front mounting plate (2) has at least one magnetically attractable region and/or is provided with at least one magnetically attractable region, and **in that** at least one magnetizable or permanently magnetic region (6, 7, 8) is configured and/or attached on that inner face of the mounting plate cover (3) which faces the front mounting plate (2), which region interacts with the magnetically attractable region of the front mounting plate (2) in such a way that the mounting plate cover (3) is held releasably on the front mounting plate (2) by means of the magnetic force of the at least one magnetic connection.

4. The arrangement according to one of the preceding claims, **characterized in that** the front mounting plate (2) is manufactured at least in regions from a ferromagnetic material, in particular is formed by a steel plate.

5. The arrangement according to Claim 3 or 4, **characterized in that** at least one magnetic strip (6, 7, 8), preferably in the form of a magnetic foil, is attached fixedly on the inner face, facing the front mounting plate (2), of the mounting plate cover (3) which is manufactured from a non-magnetic or non-magnetizable material, preferably from a plastic material, in such a way that the releasable magnetic and/or bearing connection between the front mounting plate (2) and the mounting plate cover (3) is produced by means of the at least one magnetic strip (6, 7, 8) when the mounting plate cover (3) bears against the front mounting plate (2).

6. The arrangement according to one of the preceding claims, **characterized in that** the mounting plate cover (3) is configured in multiple pieces and has an outer shell (4a), preferably made from a plastic material, on the side of which, which faces the front mounting plate (2), an inner shell (4b), preferably made from a plastic material, is fastened, in particular is fastened by means of at least one welded connection.

7. The arrangement according to Claim 5 and Claim 6, **characterized in that** the at least one magnetic strip (6, 7, 8) is fastened, in particular adhesively bonded, on that side of the inner shell (4b) which faces the front mounting plate (2).

8. The arrangement according to one of Claims 4 to 6, **characterized in that** a plurality of, preferably three, magnetic strips (6, 7, 8) are arranged in an H-shape on the inner side of the mounting plate cover (3), the two lateral H-limbs (6, 7) being attached, preferably adhesively bonded, vertically on opposite side regions of the mounting plate cover (3) to a connecting H-transverse limb (8), it preferably being provided that apertures (9, 10) are configured in the mounting plate cover (3) in the region above and/or below the transverse limb (8).

9. The arrangement according to one of the preceding claims, **characterized in that**, in the mounted state of the mounting plate cover (3), the front mounting plate (2) extends over the entire plate surface and/or, in the mounted state of the mounting plate cover (3), the front mounting plate (2) is covered at least in regions by the mounting plate cover (3) such that the latter reaches over its edges.

10. The arrangement according to one of the preceding claims, **characterized in that** the mounting plate cover (3) has rounded corners and edges.

11. The arrangement according to one of the preceding claims, **characterized in that** the mounting plate cover (3) is configured in a lid-shaped manner with a cover plate part (4) which corresponds to the shape of the front mounting plate (2), on which cover plate part (4) an edge web (5) protrudes such that it runs around it at least in regions on the edge side, preferably such that it runs around it completely, which edge web (5) engages over the plate edge of the front mounting plate (2) and covers it in the bearing position of the cover plate part (4) on the said front mounting plate (2).

12. The arrangement according to one of the preceding claims, **characterized in that**, in an upper edge web region (11) of the mounting plate cover (3), at least two hook-in elements which are spaced apart and protrude downward in the vertical axis direction, in particular hook-in hooks (12, 13), are attached, in particular are integrally formed, by way of which hook-in hooks (12, 13) the mounting plate cover (3) can be hooked from above onto an upper edge of the front mounting plate (2).

13. A vehicle, in particular a commercial vehicle, having an arrangement of a mounting plate cover on a front mounting plate according to one of the preceding claims.

## Revendications

1. Agencement d'une couverture de plaque de fixation sur une plaque de fixation frontale d'un véhicule, en particulier d'un véhicule utilitaire, comprenant une plaque de fixation frontale (2) pour le montage éventuel d'appareils rapportés, et comprenant une couverture de plaque de fixation (3) pouvant être fixée de manière amovible sur celle-ci, en tant que couverture de protection frontale, **caractérisé en ce que** la couverture de plaque de fixation (3) est retenue de manière amovible sur la plaque de fixation frontale (2) au moyen d'au moins une liaison magnétique.

2. Agencement selon la revendication 1, **caractérisé en ce que** la couverture de plaque de fixation (3) est retenue sur la plaque de fixation frontale (2) au moyen de l'au moins une liaison magnétique au moins en partie dans une liaison d'application, en particulier dans une liaison d'application sans espace.

3. Agencement selon la revendication 1 ou 2, **caractérisé en ce que** la plaque de fixation frontale (2) présente au moins une région à attraction magnétique et/ou est pourvue d'au moins une région à attraction magnétique, et **en ce que** sur la surface interne tournée vers la plaque de fixation frontale (2) de la couverture de plaque de fixation (3) est réalisée et/ou est montée au moins une région magnétisable ou à aimantation permanente (6, 7, 8) qui coopèrent avec la région à attraction magnétique de la plaque de fixation frontale (2) de telle sorte que la couverture de plaque de fixation (3) soit retenue de manière amovible sur la plaque de fixation frontale (2) au moyen de la force magnétique de l'au moins une liaison magnétique.

4. Agencement selon l'une quelconque des revendications précédentes, **caractérisé en ce que** la plaque de fixation frontale (2) est fabriquée au moins en partie à partir de matériau ferromagnétique, en particulier est formée d'une plaque d'acier.

5. Agencement selon la revendication 3 ou 4, **caractérisé en ce que** sur la surface interne tournée vers la plaque de fixation frontale (2) de la couverture de plaque de fixation (3) fabriquée à partir d'un matériau non magnétique ou non magnétisable, de préférence à partir d'un matériau en plastique, est appliquée fixement au moins une bande magnétique (6, 7, 8), de préférence sous la forme d'une feuille magnétique, de telle sorte que lors de l'application de la couverture de plaque de fixation (3) sur la plaque de fixation frontale (2) au moyen de l'au moins une bande magnétique (6, 7, 8), la liaison magnétique et/ou d'application amovible soit établie entre la plaque de fixation (2) et la couverture de plaque de fixation (3).

6. Agencement selon l'une quelconque des revendications précédentes, **caractérisé en ce que** la couverture de plaque de fixation (3) est réalisée en plusieurs parties et présente une coque extérieure (4a), de préférence en un matériau en plastique, sur le côté tourné vers la plaque de fixation frontale (2) de laquelle est fixée une coque intérieure (4b), de préférence en un matériau en plastique, en particulier au moyen d'au moins une liaison soudée.

7. Agencement selon la revendication 5 et la revendication 6, **caractérisé en ce que** l'au moins une bande magnétique (6, 7, 8) est fixée, notamment collée, sur le côté de la coque intérieure (4b) tourné vers la plaque de fixation frontale (2).

8. Agencement selon l'une quelconque des revendications 4 à 6, **caractérisé en ce que** plusieurs, de préférence trois, bandes magnétiques (6, 7, 8) sont disposées en forme de H sur le côté intérieur de la couverture de plaque de fixation (3), les deux branches latérales du H (6, 7) étant montées, de préférence collées, verticalement sur des régions latérales opposées de la couverture de plaque de fixation (3) avec une branche transversale de liaison du H (8), des orifices (9, 10) dans la couverture de plaque de fixation (3) étant de préférence prévus dans la région au-dessus et/ou en dessous de la branche transversale (8) .

9. Agencement selon l'une quelconque des revendications précédentes, **caractérisé en ce que** la plaque de fixation frontale (2), dans l'état monté de la couverture de plaque de fixation (3) s'étend sur toute la surface de la plaque et/ou la plaque de fixation frontale (2), dans l'état monté de la couverture de plaque de fixation (3), est au moins en partie recouverte par la couverture de plaque de fixation (3) par engagement par le dessus de ses bords.

10. Agencement selon l'une quelconque des revendications précédentes, **caractérisé en ce que** la couverture de plaque de fixation (3) présente des coins et des bords arrondis.

11. Agencement selon l'une quelconque des revendications précédentes, **caractérisé en ce que** la couverture de plaque de fixation (3) est réalisée en forme de couvercle avec une partie de plaque de couverture (4) correspondant à la forme de la plaque de fixation frontale (2), au niveau de laquelle fait saillie au niveau du bord une nervure de bord (5) au moins en partie périphérique, de préférence complètement périphérique, qui vient en prise, dans la position d'application de la partie de plaque de couverture (4) contre la plaque de fixation frontale (2) pardessus son bord de plaque et la recouvre.

12. Agencement selon l'une quelconque des revendications précédentes, **caractérisé en ce que** dans une région de nervure de bord supérieure (11) de la couverture de plaque de fixation (3), sont montés, en particulier façonnés, au moins deux éléments d'accrochage espacés, en particulier des crochets d'accrochage (12, 13), faisant saillie vers le bas dans la direction de l'axe vertical, avec lesquels la couverture de plaque de fixation (3) peut être accrochée par le haut à un bord supérieur de la plaque de fixation frontale (2).

13. Véhicule, en particulier véhicule utilitaire comprenant un agencement d'une couverture de plaque de fixation à une plaque de fixation frontale selon l'une quelconque des revendications précédentes.
